# EUROPÄISCHE PATENTANMELDUNG

(11) **EP 1 160 081 A2**
(43) Veröffentlichungstag der Anmeldung: **05.12.2001**
(21) Anmeldenummer: 01121425.1
(22) Anmeldetag: 12.04.2000
(51) Int. Cl.: B41C 1/04, H04N 1/40

(54) **Verfahren zum Betrieb einer Graviermaschine**

(30) Priorität: 03.05.1999 DE 19920207
(62) Teilanmeldung aus: 00936615.4
(71) Anmelder: Heidelberger Druckmaschinen Aktiengesellschaft, 69115 Heidelberg (DE)
(72) Erfinder: Lübcke, Bernd, 24113 Molfsee (DE)

(57) **Zusammenfassung**

Die Erfindung betrifft ein Verfahren zum Betrieb einer elektronischen Graviermaschine zur Gravur von Druckzylindern für den Tiefdruck mittels eines durch ein Graviersteuersignal angesteuerten Gravierorgans. Zur Kalibrierung des Graviersteuersignals werden bei einer Probegravur Probenäpfchen (10) für vorgegebene Soll-Tonwerte graviert und deren Istabmessungen mittels einer auf den Druckzylinder (1) aufgesetzten, mobilen Meßvorrichtung (11) ausgemessen. Die ermittelten Meßwerte werden von der mobilen Meßvorrichtung (11) drahtlos an einen ortsfesten Meßwertempfänger (17) an der Graviermaschine übertragen. Eine Kontrollvorrichtung (12, 13, 14) überwacht, ob sich die Meßvorrichtung (11) auf dem Druckzylinder (1) befindet oder nicht. Die Kontrollvorrichtung (12, 13, 14) stellt sicher, daß die drahtlose Übertragung der Meßwerte nur während der Kalibrierung erfolgt. Um eine Zerstörung der Meßvorrichtung (11) zu vermeiden, verhindert die Kontrollvorrichtung (12, 13, 14) einen Gravurstart, falls sich die Meßvorrichtung (11) noch auf dem Druckzylinder (1) befindet.

## Beschreibung

Die Erfindung bezieht sich auf das Gebiet der elektronischen Reproduktionstechnik und betrifft ein Verfahren zum Betrieb einer elektronischen Graviermaschine zur Gravur von Druckzylindern für den Tiefdruck und eine Meßvorrichtung für eine Graviermaschine.

In einer elektronischen Graviermaschine bewegt sich ein Gravierorgan beispielsweise mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Gravurraster angeordneten Näpfchen in die Mantelfläche des Druckzylinders. Das Graviersteuersignal wird in einem Gravierverstärker durch Überlagerung von Bildsignalwerten, welche die zu gravierenden Tonwerte zwischen "Licht" und "Tiefe" repräsentiert, mit einem periodischen Rastersignal gebildet. Während das Rastersignal eine vibrierende Hubbewegung des Gravierstichels zur Erzeugung des Gravurrasters bewirkt, bestimmen die Bildsignalwerte die geometrischen Abmessungen der in die Mantelfläche des Druckzylinders gravierten Näpfchen.

Vor der eigentlichen Gravur werden bei einer sogenannten Probegravur für vorgegebene Tonwerte Probenäpfchen auf dem Druckzylinder graviert. Nach dem Probeschnitt werden die geometrischen Istabmessungen der gravierten Probenäpfchen mittels eines auf den Druckzylinder aufgesetzten Meßvorrichtung, beispielsweise mittels eines Meßmikroskops, ausgemessen, notiert und mit vorgegebenen geometrischen Sollabmessungen der Näpfchen verglichen. Aus dem Wertevergleich werden Einstellwerte gewonnen, die in einen Gravierverstärker eingegeben werden, um das Graviersteuersignal derart zu kalibriert, daß die bei der späteren Gravur tatsächlich erzeugten Näpfchen den für eine tonwertrichtige Wiedergabe erforderlichen Näpfchen entsprechen.

Aus der US-A-5,293,426 ist bereits ein Verfahren und eine Vorrichtung zum Betrieb einer elektronischen Graviermaschine sowie eine Meßvorrichtung in Form eines Meßmikroskops zur Ermittlung der Abmessungen von gravierten Näpfchen bekannt.

In der US-A-3,931,570 wird eine portable Meßvorrichtung zum Ausmessen der Volumina von gravierten Näpfchen beschrieben.

Bei der herkömmlichen Vorgehensweise muß der Operator die mit der Meßvorrichtung erzielten Meßergebnisse notieren und zur Weiterverarbeitung in die Graviermaschine, beispielsweise in den Gravierverstärker, eingeben, wobei sich beim Notieren der Meßergebnisse und beim Eingeben der Meßergebnisse in die Graviermaschine in nachteiliger Weise Fehler einschleichen können. Diese Vorgehensweise ist besonders zeitraubend und fehlerbehaftet, wenn der Operator beispielsweise beim Magazindruck mehrere Graviermaschinen gleichzeitig zu bedienen hat.

Aufgabe der vorliegenden Erfindung ist es daher, ein Verfahren zum Betrieb einer Graviermaschine sowie eine Meßvorrichtung für eine Graviermaschine derart zu verbessern, daß eine sichere Auswertung der Meßergebnisse, insbesondere beim gleichzeitigen Betrieb mehrerer Graviermaschinen, gewährleistet ist.

Diese Aufgabe wird bezüglich des Verfahrens durch den Anspruch 1 und bezüglich der Meßvorrichtung durch den Anspruch 7 gelöst. Vorteilhafte Ausgestaltungen und Weiterbildungen sind in den Unteransprüchen angegeben.

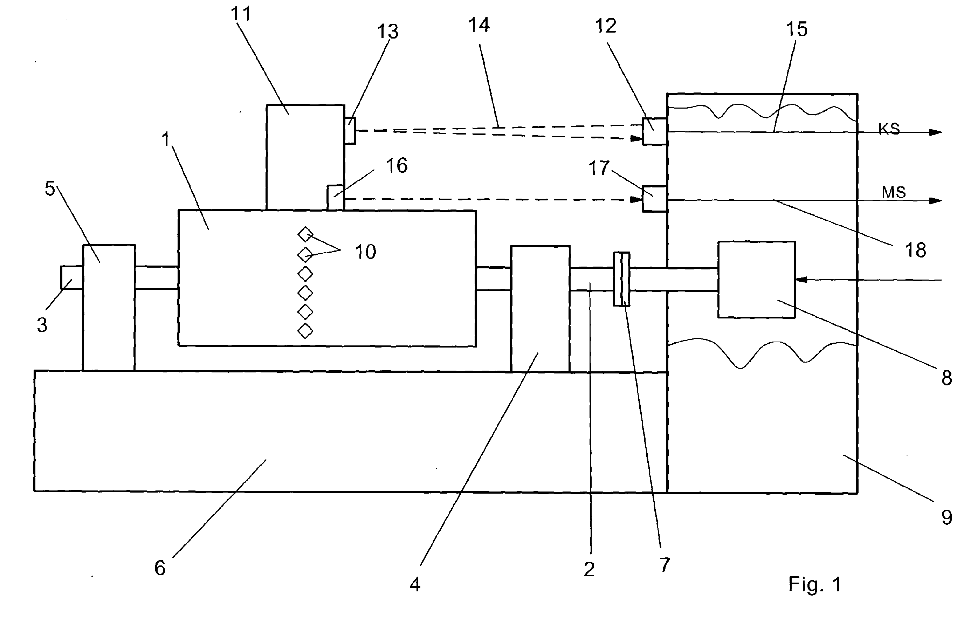

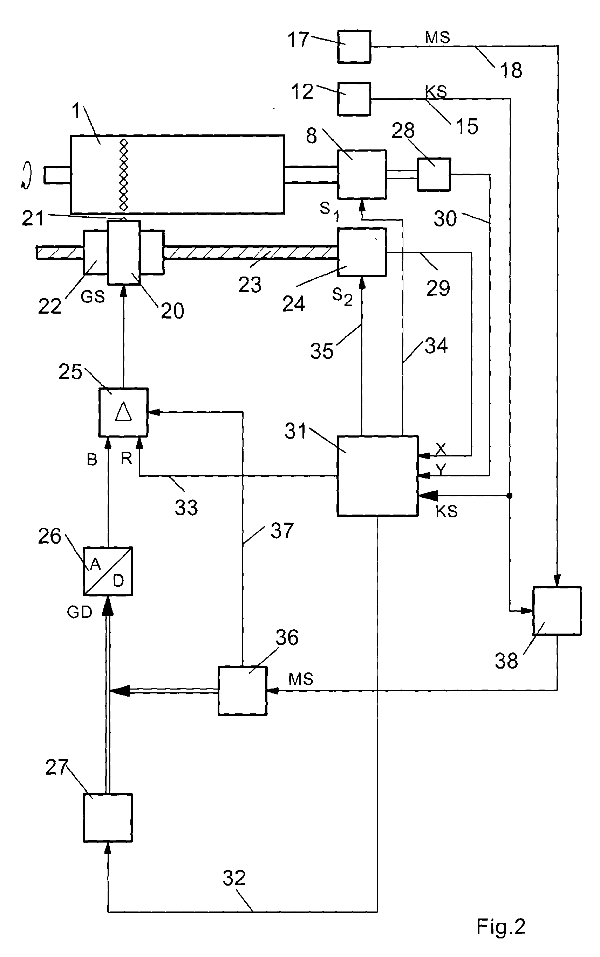

Die Erfindung wird nachfolgend anhand der Fig. 1 und 2 näher erläutert.

### Es zeigen:

- Fig. 1: den prinzipiellen mechanischen Aufbau einer Graviermaschine in einer Seitenansicht und
- Fig. 2: ein Blockschaltbild einer Graviermaschine.

Fig. 1 zeigt den prinzipielle mechanischen Aufbau einer elektronische Graviermaschine zur Gravur von Druckzylindern für den Tiefdruck in einer Seitenansicht. Die Graviermaschine ist beispielsweise ein HelioKlischograph® der Firma Hell Gravure Systems GmbH, Kiel, DE.

Ein Druckzylinder (1) ist mit seinen Wellenenden (2, 3) in zwei Lagerböcken (4, 5) rotatorisch gelagert, die auf einem Maschinenbett (6) montiert sind. Der Druckzylinder (1) wird über eine Kupplung (7) von einem Zylinderantrieb (8) angetrieben, der in einem seitlichen Antriebsturm (9) der Graviermaschine untergebracht ist. Die Gravur auf dem Druckzylinder (1) erfolgt mittels eines Gravierstichels eines nicht dargestellten Gravierorgans, das von einem Graviersteuersignal angesteuert wird und sich zur flächenhaften Gravur axial an dem rotierenden Druckzylinder (1) entlang bewegt.

Vor der eigentlichen Gravur des Druckzylinders (1) werden bei der Probegravur Probenäpfchen (10) auf dem Druckzylinder (1) graviert, deren geometrische Istabmessungen mittels eines auf den Druckzylinder (1) aufgesetzten optischen oder elektronischen Meßvorrichtung (11) ausgemessen und mit den vorgegebenen geometrischen Sollabmessungen der Probenäpfchen (10) verglichen werden. Aus dem Wertevergleich werden Einstellwerte gewonnen, mit denen das Graviersteuersignal dann derart kalibriert wird, daß die bei der späteren Gravur tatsächlich erzeugten Näpfchen den für eine tonwertrichtige Wiedergabe erforderlichen Näpfchen entsprechen. Die Meßvorrichtung (11) ist beispielsweise ein Meßmikroskops mit einem eingebauten Maßstab, dessen Meßergebnisse in elektrische Meßsignale umgesetzt werden, oder einer Videokamera. Im Fall einer Videokamera erfolgt die Messung der Istabmessungen der gravierten Probenäpfchen elektronisch in dem von der Videokamera aufgenommenen Videobild, beispielsweise nach der WO-A-98/55302.

Um eine sichere und automatische Auswertung der Meßergebnisse, insbesondere beim gleichzeitigen Betrieb mehrerer Graviermaschinen, zu gewährleisten, werden erfindungsgemäß die mit der mobilen Meßvorrichtung (11) erfaßten Meßwerte mittels eines an oder in der Meßvorrichtung (11) befindlichen Meßwertsenders (16) drahtlos an einen ortsfesten Meßwertempfänger (17) übertragen. Der ortsfeste Meßwertsender (17) kann sich beispielsweise jeweils an einer Graviermaschine oder beim Betrieb mit mehreren Graviermaschinen an einer zentralen Einrichtung befinden.

Im dargestellten Ausführungsbeispiel ist der ortsfeste Meßwertempfänger (17) ebenfalls an dem Antriebsturm (9) der Graviermaschine angebracht. Die an den Meßwertempfänger (17) drahtlos übermittelten Meßwerte werden dort in elektrische Meßwertsignale MS auf einer Leitung (18) zur Weiterverarbeitung umgewandelt. Die Übertragung der Meßwerte kann durch Licht, beispielsweise IR Licht, Schall oder elektromagnetisch (HF) erfolgen.

Zur Gewährleistung eines sicheren Betriebes erweist es sich als vorteilhaft, die Übertragung der Meßwerte an einer Graviermaschine nur dann freizuschalten, wenn sich auch eine Meßvorrichtung (11) auf dem Druckzylinder (1) der betreffenden Graviermaschine befindet und die Meßwerte auch tatsächlich zur Kalibrierung des Graviersignals benötigt werden. Um diese Forderung zu erreichen, wird erfindungsgemäß die Freischaltung der Meßwertübertragung von einem in einer Kontrollvorrichtung (12, 13, 14) erzeugten Kontrollsignal KS gesteuert, das überwacht, ob sich gerade eine Meßvorrichtung (11) auf dem Druckzylinder (1) befindet oder nicht.

Die Meßvorrichtung (11), die für eine drahtlose Meßwertübertragung eingerichtet und darüber hinaus batteriebetrieben ist, kann mit Vorteil für eine Vielzahl von Graviermaschinen eingesetzt werden, wobei jede Graviermaschine mit einer Kontrollvorrichtung (12, 13, 14) und einem Meßwertempfänger (17) ausgerüstet ist, und die mobile Meßvorrichtung (11) bedarfsweise von Graviermaschine zu Graviermaschine transportiert wird. Auch in diesem Fall erweist es sich als zweckdienlich, die Meßwertübertragung an einer Graviermaschine durch das Kontrollsignal KS dieser Graviermaschine derart zu steuern, daß die Meßwertübertragung nur in der Kalibrierungsphase und selektiv nur für die betreffenden Graviermaschine erfolgt.

Die Kontrollvorrichtung (12, 13, 14) besteht in dem dargestellten Ausführungsbeispiel aus einem an dem Antriebsturm (9) der Graviermaschine angebrachten, ortsfesten optoelektronischen Sensor (12) und einem an der Meßvorrichtung (11) befindlichen und dem Sensor (12) zugewandten Reflektor (13). Der Sensor (12) erzeugt einen in Achsrichtung des Druckzylinders (1) verlaufenden Überwachungsstrahl (14) der von dem Reflektor (13) der Meßvorrichtung (11) auf den ortsfesten Sensor (12) reflektiert wird, falls sich die Meßvorrichtung (11) auf dem Druckzylinder (1) befindet. Der Sensor (12) erzeugt dann das Kontrollsignal KS auf einer Leitung (15) zur Weiterverarbeitung.

Der Sensor (12) ist an dem Antriebsturm (9) in einer solchen Höhe angebracht, daß der Reflektor (13) etwa auf der optischen Achse des Sensors (12) liegt, wenn die Meßvorrichtung (11) auf einem Druckzylinder (1) mit einem mittleren Durchmessers steht. Der Überwachungsstrahl (14) ist in zweckmäßiger Weise in Ausbreitungsrichtung keulenförmig mit einem relativ großen Querschnitt im Bereich des Reflektors (13) ausgebildet. Dadurch wird erreicht, daß der Überwachungsstrahl (14) auch dann von dem Reflektor (13) erfaßt wird, wenn diese in unterschiedlichen Höhen aufgrund unterschiedlicher Durchmesser des jeweiligen Druckzylinders (1) oder in Umfangsrichtung des Druckzylinders (1) aufgrund einer ungenauen Positionierung der Meßvorrichtung (11) zur optischen Achse des Sensors (12) versetzt ist. Durch die Keulenform des Überwachungsstrahls (14) ist die Reflexion außerdem unabhängig von der axialen Meßposition der Meßvorrichtung (11) auf dem Druckzylinder (1). Ferner erweist es sich als zweckdienlich, auf jeder Stirnseite der Meßvorrichtung (11) einen entsprechenden Reflektor (13) anzubringen.

Die Erfindung ist nicht auf das beschriebene Ausführungsbeispiel für die Kontrollvorrichtung beschränkt. Die Überwachung der Meßvorrichtung kann beispielsweise auch mit einer Lichtschranke erfolgen. In diesem Fall ist der Reflektor ortsfest an der Graviermaschine befestigt oder auf der dem Sensor gegenüber liegenden Seite ist eine Lichtquelle zur Erzeugung des Überwachungsstrahls angeordnet.

Um Beschädigung der relativ teuren Meßvorrichtung (11) und/oder der Graviermaschine zu verhindern, kann das Kontrollsignal KS in bevorzugter Weise auch ein Gravurstart verhindern und/oder eine entsprechende Anzeige auszulösen, falls der Operator vergessen haben sollte, die Meßvorrichtung (11) vor dem Gravurstart von dem Druckzylinder (1) zu entfernen.

Fig. 2 zeigt ein Blockschaltbild einer Graviermaschine. Der Druckzylinder (1) wird von dem Zylinderantrieb (8) rotatorisch angetrieben. Die Gravur auf dem Druckzylinder (1) erfolgt mittels eines Gravierorgans (20), das beispielsweise als elektromagnetisches Gravierorgan mit einem Gravierstichel (21) als Schneidwerkzeug ausgebildet ist. Das Gravierorgan (20) befindet sich auf einem Gravierwagen (22), der mittels einer Spindel (23) von einem Gravierwagenantrieb (24) axial an dem Druckzylinders (1) vorbei bewegt wird.

Der Gravierstichel (22) des Gravierorgans (21) wird durch ein Graviersteuersignal GS gesteuert. Das Graviersteuersignal GS wird in einem Gravierverstärker (25) durch Überlagerung eines periodischen Rastersignals R mit Bildsignalwerten B gebildet, welche die Tonwerte der zu gravierenden Näpfchen zwischen "Licht" und "Tiefe" repräsentieren. Während das periodische Rastersignal R eine vibrierende Hubbewegung des Gravierstichels (21) zur Erzeugung des Gravurrasters bewirkt, bestimmen die Bildsignalwerte B entsprechend den zu gravierenden Tonwerten die Eindringtiefe des Gravierstichels (21) in den Druckzylinder (1).

Die analogen Bildsignalwerte B werden in einem D/A-Wandler (26) aus Gravurdaten GD gewonnen, die in einem Gravurdatenspeicher (27) abgelegt sind und aus diesem Gravierlinie für Gravierlinie ausgelesen und dem D/A-Wandler (26) zugeführt werden.

Dem Druckzylinder (1) ist ein XY-Koordinatensystem zugeordnet, dessen X-Achse in Achsrichtung und dessen Y-Achse in Umfangsrichtung des Druckzylinders (1) orientiert sind. Der Gravierwagenantrieb (24) erzeugt die x-Ortskoordinaten und ein mit dem Zylinderantrieb (8) mechanisch gekoppelter Positionsgeber (28) erzeugt die y-Ortskoordinaten, die über Leitungen (29, 30) einem Steuerwerk (31) zugeführt werden.

Das Steuerwerk (31) steuert die Adressierung und das Auslesen der Gravurdaten (GD) aus dem Gravurdatenspeicher (27) in Abhängigkeit von den xy-Ortskoordinaten der aktuellen Gravierorte über eine Leitung (32). Das Steuerwerk (31) erzeugt außerdem das Rastersignal R auf einer Leitung (33), ein Steuersignal S₁ auf einer Leitung (34) zum Starten und Stoppen des Zylinderantriebs (8) und ein Steuersignal S₂ auf einer Leitung (35) zum Starten und Stoppen des Gravierwagenantriebs (24).

Zur Durchführung eines Probeschnitts vor der eigentlichen Gravur weist die Graviermaschine einen Probegravurrechner (36) auf, der die zur Gravur der Probenäpfchen (10) erforderlichen Gravurdaten (GD*) an den D/A-Wandler (26) liefert, welche die vorgegebenen Soll-Tonwert der Probenäpfchens (10) repräsentieren. Nach der Probegravur wird, wie in Fig. 1 beschrieben, die Meßvorrichtung (11) auf den Druckzylinder (1) aufgesetzt. Mit der Meßvorrichtung (11) werden dann die geometrischen Istabmessungen der gravierten Probenäpfchen (10) ausgemessen und an den Meßwertempfänger (17) übertragen, von dem die gemessenen Istabmessungen als Meßwertsignale MS über die Leitung (18) an den Probegravurrechner (36) transportiert werden. In dem Probegravurrechner (36) werden durch Vergleich der gemessenen Istabmessungen mit vorgegebenen Sollabmessungen Einstellwerte zur Kalibrierung des Gravierverstärkers (25) gewonnen, die diesem über eine Leitung (37) zugeführt werden.

Das von der Kontrollvorrichtung (12, 13, 14), von der in Fig. 2 nur der optoelektronische Sensor (12) dargestellt ist, erzeugte Kontrollsignal KS gelangt über die Leitung (15) an das Steuerwerk (31). Falls vergessen wurde, die in Fig. 2 nicht dargestellte Meßvorrichtung (11) nach der Kalibrierungsphase von dem Druckzylinder (1) zu entfernen, verhindert das Kontrollsignal KS im Steuerwerk (31) über das Steuersignal S₁ die Rotation des Druckzylinders (1) und gegebenenfalls über das Steuersignal S₂ die Vorschubbewegung des Gravierwagens (22).

Das Kontrollsignal KS steuert außerdem eine Freischaltestufe (38), mittels der der Transfer der Meßsignale MS an den Probegravurrechner (36) nur in der Kalibrierungsphase freigeschaltet wird.

## Patentansprüche

1. Verfahren zum Betrieb einer elektronischen Graviermaschine zur Gravur von Druckzylindern für den Tiefdruck, bei dem
- ein durch ein Graviersteuersignal (GS) angesteuertes Gravierorgan (20) eine Folge von Näpfchen in den rotierenden Druckzylinder (1) eingraviert, deren Istabmessungen die gravierten Ist-Tonwerte bestimmen,
- bei einer vor der eigentlichen Gravur des Druckzylinders (1) stattfindenden Probegravur Probenäpfchen (10) für vorgegebene Soll-Tonwerte graviert werden und
- die Istabmessungen der Probenäpfchen (10) mittels mobilen Meßvorrichtung (11) ausgemessen und mit den die vorgegebenen Soll-Tonwerte bestimmenden Sollabmessungen verglichen werden, um Einstellwerte zu gewinnen, mit denen das Graviersteuersignal (GS) derart kalibriert wird, daß die gravierten Ist-Tonwerte den zu gravierenden Soll-Tonwerten entsprechen, **dadurch gekennzeichnet, daß** die mit der mobilen Meßvorrichtung (11) gewonnenen Meßwerte drahtlos an einen ortsfesten Meßwertempfänger (17) übertragen werden.

2. Verfahren zum Betrieb einer Graviermaschine nach Anspruch 1, **dadurch gekennzeichnet, daß** sich der ortsfeste Meßwertempfänger (17) an der Graviermaschine befindet.

3. Verfahren zum Betrieb einer Graviermaschine nach Anspruch 1 oder 2, **dadurch gekennzeichnet, daß** die drahtlose Übertragung der Meßwerte nur während der Kalibrierung erfolgt.

4. Verfahren zum Betrieb einer Graviermaschine nach mindestens einem der Ansprüche 1 bis 3, **dadurch gekennzeichnet, daß**
- bei Vorhandensein der Meßvorrichtung (11) auf dem Druckzylinder (1) ein Kontrollsignal (KS) erzeugt wird und
- die drahtlose Übertragung der Meßwerte durch das Kontrollsignal (KS) freigeschaltet wird.

5. Verfahren zum Betrieb einer Graviermaschine nach mindestens einem der Ansprüche 1 bis 4, **dadurch gekennzeichnet, daß**
- mehrere Graviermaschinen vorhanden sind,
- die Meßvorrichtung (11) jeweils auf den Druckzylinder (1) derjenigen Graviermaschine aufgesetzt wird, mit der eine Probegravur durchgeführt wurde
und
- die drahtlose Übertragung der Meßwerte jeweils durch das Kontrollsignal (KS) der betreffenden Graviermaschine selektiv freigeschaltet wird.

6. Verfahren zum Betrieb einer Graviermaschine nach mindestens einem der Ansprüche 1 bis 5, **dadurch gekennzeichnet, daß**
- überwacht wird, ob sich die Meßvorrichtung (11) auf dem Druckzylinder (1) befindet oder nicht und
- falls die Meßvorrichtung (11) auf dem Druckzylinder (1) vorhanden ist, ein Gravurstart verhindert wird.

7. Meßvorrichtung für eine Graviermaschine zur Gravur von Druckzylindern (1) mittels eines Gravierorgans, **dadurch gekennzeichnet, daß** die Meßvorrichtung (11) einen eingebauten Meßwertsender (16) zur drahtlosen Übertragung der Meßwerte von gravierten Probenäpfchen (10) an einen ortsfesten Meßwertempfänger (17) aufweist.

8. Meßvorrichtung nach Anspruch 7, **dadurch gekennzeichnet, daß** die Meßvorrichtung (11) batteriebetrieben ist.

9. Meßvorrichtung nach Anspruch 7 oder 8, **dadurch gekennzeichnet, daß** die Meßvorrichtung (11) ein Meßmikroskop ist.

10. Meßvorrichtung nach Anspruch 7 oder 8, **dadurch gekennzeichnet, daß** die Meßvorrichtung (11) eine Videokamera ist.
